# EUROPÄISCHE PATENTANMELDUNG

(11) **EP 1 724 679 A2**
(43) Veröffentlichungstag der Anmeldung: **22.11.2006**
(21) Anmeldenummer: 06111211.6
(22) Anmeldetag: 15.03.2006
(51) Int. Cl.: G06F 9/445

(54) **Verfahren, Einrichtung und Computerprogramm zur Handhabung von Ergänzungsprogrammen**

(30) Priorität: 11.05.2005 DE 102005021798
(71) Anmelder: Honeywell Technologies Sarl ECC, 1110 Morges (CH)
(72) Erfinder: GÜNTER, Thomas, 72175, Dornhan (DE); TOLSTONOG-RIEDEL, Lew, 71263, Weil der Stadt (DE)
(74) Vertreter: TBK-Patent

(57) **Zusammenfassung**

Verfahren, Datenverarbeitungseinrichtung und Computerprogramm zum Ausführen eines Ergänzungsprogramms für ein Hauptprogramm ohne vorherige Installation des Ergänzungsprogramms auf einer das Hauptprogramm ausführenden Datenverarbeitungseinrichtung, die von einer anderen Datenverarbeitungseinrichtung Daten und einen Schlüssel empfängt, der Informationen bezüglich eines zum Bearbeiten der Daten zusätzlich zum Hauptprogramm erforderlichen Ergänzungsprogramms umfasst, wobei die Datenverarbeitungseinrichtung mit Hilfe des empfangenen Schlüssels auf eine in einem vordefinierten Pfad gespeicherte Ergänzungsprogrammdatei des erforderlichen Ergänzungsprogramms zugreifen kann, die Bezeichnungsinformationen enthält, welche zum Ausführen des Ergänzungsprogramms durch das Hauptprogramm und zum Registrieren des Ergänzungsprogramms in einer Registrierdatenbank der Datenverarbeitungseinrichtung benötigt werden. Dadurch wird eine erleichterte Handhabung von Ergänzungsprogrammen bereitgestellt.

## Beschreibung

Die Erfindung bezieht sich auf ein Verfahren, eine Datenverarbeitungseinrichtung und ein Computerprogramm zur Handhabung von Programmen und dazugehörigen Funktionalitäten in Datenverarbeitungseinrichtungen und insbesondere auf die Handhabung von Ergänzungsprogrammen.

Im Stand der Technik sind hierzu modulare Ergänzungsprogramme, sogenannte Plug-In's, bekannt. Diese dienen dazu, bestehende nachfolgend als Hauptprogramme bezeichnete Programme wie etwa Anwendungsprogramme, die auf einem Rechner ablaufen, mit neuen bzw. erweiterten Funktionen zu versehen. Im Stand der Technik erfolgt dies üblicherweise gemäß einem Datei-basierten Ansatz. Ein Beispiel hierfür ist ein Internet-Browser, dem es mittels eines derartigen Ergänzungsprogramms ermöglicht wird, Dateien eines bestimmten Dateityps wie etwa PDF ("portable data format") anzuzeigen ohne ein zusätzliches Hauptprogramm für diesen Zweck starten zu müssen.

Der Vorteil dieses modularen Konzepts liegt darin, dass das bereits installierte Hauptprogramm bei Neuerungen und Erweiterungen ohne Änderungen weiterhin funktionsfähig bleibt und die neuen Funktionen durch das Ergänzungsprogramm bzw. Plug-In eingebracht werden. Das Hauptprogramm und das Ergänzungsprogramm bleiben dabei eigenständige Objekte, die bei Bedarf zusammenarbeiten.

Allgemein sind solche Anordnungen derart realisiert, dass das Hauptprogramm über eine Software-Schnittstelle verfügt, die das Ergänzungsprogramm bzw. Plug-In mit dem Hauptprogramm verbindet.

Bei der Microsoft Windows®-Technologie wird dafür zum Beispiel der sogenannte COM-Mechanismus (COM: "Component Object Model") als Komponentenobjektmodell verwendet. Der COM-Mechanismus ermöglicht es, dass Programmteile (z.B. Hauptprogramm und Ergänzungsprogramm) mit verschiedenen Versionen miteinander laufen und damit zusammenarbeiten können, ohne dass diese Programmteile mit einem Entwicklungswerkzeug erneut bearbeitet werden müssen.

Zur Implementierung erfordert der COM-Mechanismus als Beispiel für eine Realisierung einer Software-Schnittstelle zwischen Haupt- und Ergänzungsprogrammen rechnerspezifische Einträge in einer Registrierdatenbank ("Registry") des Rechners, auf dem das Hauptprogramm mit dem/den Ergänzungsprogramm/en ausgeführt wird. In der Praxis bedeutet das Anlegen eines rechnerspezifischen Eintrags, dass für jedes Ergänzungsprogramm bzw. Plug-In einmalig ein eigenes Installationsprogramm auf dem Rechner ausgeführt werden muss, auf dem es einem oder mehreren Hauptprogrammen zur Verfügung stehen soll.

Dies ist für den Benutzer zeitaufwendig und unkomfortabel. Außerdem müssen auf dem Rechner zu diesem Zweck auch die jeweiligen Installationsprogramme der Plug-In's vorhanden sein, was im Hinblick auf erforderlichen Speicherplatz, insbesondere bei tragbaren Systemen, nachteilig ist.

Ein besonderes Problem in diesem Zusammenhang ergibt sich bei der Benutzung mehrerer Rechner. Dies ist zum Beispiel der Fall, wenn ein Benutzer Daten von seinem Arbeitsplatzrechner auf einen tragbaren Rechner bzw. Laptop-Computer transferieren möchte und diese Daten die Ausführung eines Ergänzungsprogramms zusätzlich zum Hauptprogramm erfordern.

Üblicherweise werden bei Benutzung mehrerer Rechner Daten durch Transferieren von Dateien ausgetauscht. Sofern es sich bei den in den beiden verwendeten Rechnern vorliegenden Hauptprogrammen um die gleichen oder kompatible Hauptprogramme handelt, sind diese in der Lage, die transferierten Dateien einzulesen und zu bearbeiten. Wenn zur Bearbeitung der in den Dateien enthaltenen Daten aber spezielle Ergänzungsprogramme bzw. Plug-In's (PI) erforderlich sind, ist der Benutzer dazu gezwungen, auf dem die Daten empfangenden Rechner das dazugehörige Installationsprogramm jedes benötigten Ergänzungsprogramms auszuführen. Die kann besonders bei einer größeren Anzahl notwendiger Ergänzungsprogramme (z.B. 10 bis 15 Stück) zu erheblichen Handhabungsproblemen führen, zum Beispiel im Hinblick auf den dazu erforderlichen Zeitaufwand und den Benutzungskomfort. Zusätzlich muss sichergestellt sein, dass auf dem die Daten empfangenden Rechner die notwendigen Installationsprogramme für alle erforderlichen Ergänzungsprogramme überhaupt vorhanden sind.

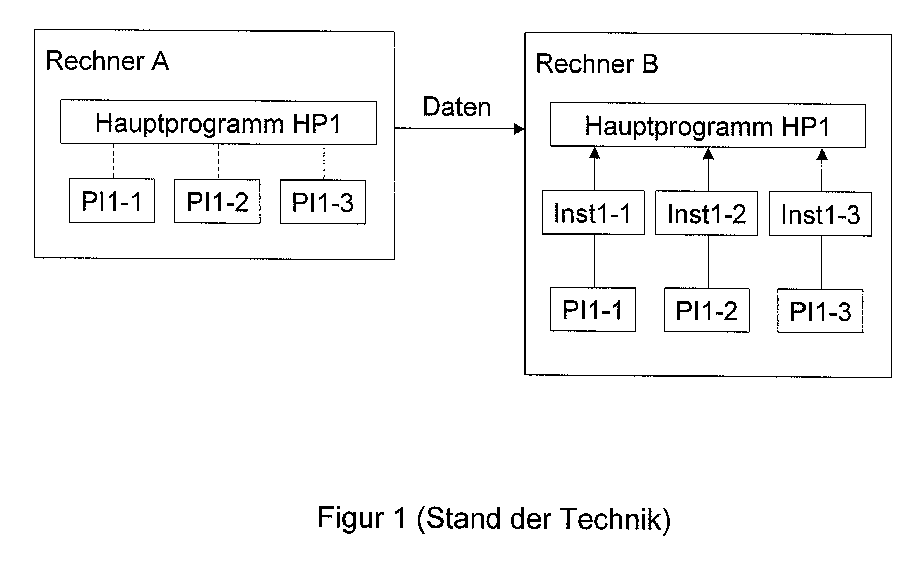

Eine derartige Situation wie oben beschrieben ist gemäß Figur 1 dargestellt. Auf Rechner A sind neben einem Hauptprogramm HP1 beispielsweise 3 Ergänzungsprogramme PI1-1, PI1-2, PI1-3 für dieses Hauptprogramm HP1 installiert, was mittels gestrichelter Linien zwischen den entsprechenden Blöcken dargestellt ist. Mittels eines Pfeils von Rechner A zu Rechner B ist ein Transfer von Daten in Form von Dateien veranschaulicht. Die transferierten Daten müssen auf Rechner B mit Hauptprogramm HP1 (oder einem kompatiblen Hauptprogramm) in Zusammenarbeit mit Ergänzungsprogrammen PI1-1, PI1-2, PI1-3 bearbeitet werden. Daher müssen auch auf Rechner B die Ergänzungsprogramme PI1-1, PI1-2, PI1-3 installiert sein. Wenn dies nicht der Fall ist, muss der Benutzer diese nach Empfang der Daten installieren, was zeitaufwendig und unkomfortabel ist. Das Installationserfordernis auf Rechner B ist gemäß Figur 1 dargestellt, indem Pfeile von den die Ergänzungsprogramme darstellenden Blöcken "PI1-1", "PI1-2" und "PI1-3" über jeweilige Installationsprogramme darstellende Blöcke "Inst1-1", "Inst1-2" und "Inst1-3" auf das zugehörige Hauptprogramm HP1 auf Rechner B zeigen.

Es ist folglich ein Nachteil des Standes der Technik, dass die Handhabung von Ergänzungsprogrammen schwierig, administrativ und zeitlich aufwendig, sowie unkomfortabel ist.

Die Schnittstelle zwischen Hauptprogramm und Ergänzungsprogramm/en wird wie vorstehend beschrieben zum Beispiel mit Hilfe des COM-Mechanismus gebildet. Der COM-Mechanismus benutzt dabei die rechnereigene Registrierdatenbank zum Speichern von Informationen für jedes auf dem Rechner installierte Ergänzungsprogramm. Diese Informationen weisen eine Verknüpfung auf zwischen Bezeichnungsinformationen des jeweiligen Ergänzungsprogramms und dem Ort, wo auf dem Rechner das Ergänzungsprogramm abgelegt ist. Die Bezeichnungsinformationen können ein zum Beispiel als Klassenschlüssel ("class key") bekannter Schlüssel sein, mit dem das Hauptprogramm das Ergänzungsprogramm aufrufen kann. Der Ort des Ergänzungsprogramms besteht beispielsweise aus Pfad und/oder Namen des Ergänzungsprogramms.

Diese Informationen werden üblicherweise als Teil der Installation durch das Installationsprogramm des jeweiligen Ergänzungsprogramms in der Registrierdatenbank des Rechners gespeichert, d.h. registriert. Speziell der Pfad, wohin das Ergänzungsprogramm gespeichert werden soll, kann üblicherweise durch den Benutzer festgelegt werden und wird dementsprechend in der Registrierdatenbank gespeichert, damit das Hauptprogramm mit Hilfe des Klassenschlüssels herausfinden kann, wo das Ergänzungsprogramm zu finden ist.

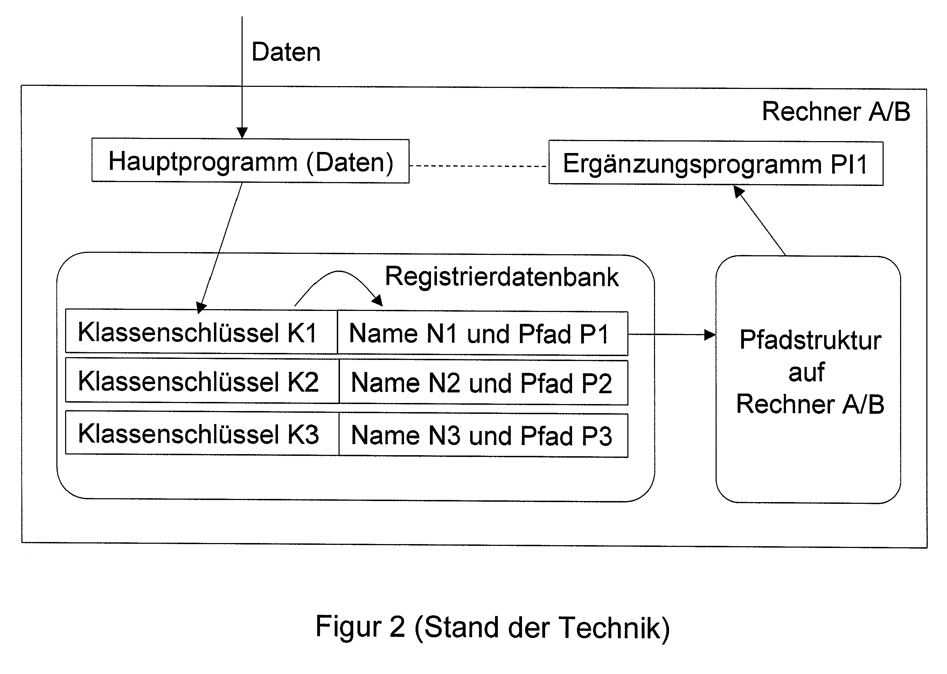

Dies ist gemäß Figur 2 dargestellt. In einem Rechner A/B wird ein Hauptprogramm ausgeführt, das Daten zur Bearbeitung bekommen hat. Diese Daten können im Rechner bzw. im Hauptprogramm erzeugt worden sein oder von einem anderen Rechner empfangen worden sein. Anhand der Daten, z.B. mit Hilfe einer Dateiendung oder des Datentyps, erkennt das Hauptprogramm, dass es die Daten nicht selbständig bearbeiten kann. Deshalb greift es auf die rechnereigene Registrierdatenbank zu, um unter den auf dem Rechner installierten und in der Datenbank registrierten Ergänzungsprogrammen nach einem geeigneten Ergänzungsprogramm zur Bearbeitung der Daten zu suchen. Diese Suche erfolgt zum Beispiel anhand des Datentyps bzw. Dateityps. Dabei entspricht jeder bearbeitbare Dateityp bzw. Datentyp einem Klassenschlüssel. Bei dem gemäß Figur 2 dargestellten Beispiel wird Klassenschlüssel K1 als der passende erkannt. Diesem ist das Ergänzungsprogramm PI1 mit Namen N1 und Pfad P1 zugeordnet. Somit kennt das Hauptprogramm den Pfad, wo es das erforderliche Ergänzungsprogramm findet. Über einen Zugriff auf die rechnereigene Pfadstruktur erfolgt somit der Aufruf des Ergänzungsprogramms PI1, womit das Hauptprogramm und das Ergänzungsprogramm PI1 in Verbindung gebracht sind, was in Übereinstimmung mit Figur 1 als gestrichelte Linie dargestellt ist. Nun ist die Bearbeitung der Daten im Hauptprogramm mit Hilfe des Ergänzungsprogramms möglich.

Es ist folglich ein weiterer Nachteil des Standes der Technik, dass ein Zugriff von einem Hauptprogramm auf ein zur Bearbeitung von Daten erforderliches Ergänzungsprogramm erst nach Installation dieses Ergänzungsprogramms (einschließlich Registrierung) auf dem Rechner erfolgen kann.

Dementsprechend liegt der Erfindung die Aufgabe zu Grunde, ein Verfahren, eine Einrichtung und ein Computerprogramm zur Handhabung von Ergänzungsprogrammen zu schaffen.

Die Aufgabe wird erfindungsgemäß mit dem Verfahren gemäß Patentanspruch 1, der Datenverarbeitungseinrichtung gemäß Patentanspruch 13 und dem Computerprogramm gemäß Patentanspruch 14 gelöst.

Weitere vorteilhafte Ausführungsbeispiele der Erfindung sind in den abhängigen Patentansprüchen dargelegt.

Es ist eine Vorteil der Erfindung, dass nach einer Übertragung von Daten auf der empfangenden Datenverarbeitungseinrichtung für die übertragenen Daten erforderliche Ergänzungsprogramme automatisch ohne Installation ausgeführt werden können.

Es ist ein weiterer Vorteil der Erfindung, dass eine manuelle Installation bzw. Registrierung von Ergänzungsprogrammen möglichst einfach ausgeführt werden kann, d.h. gar keine manuelle Installation notwendig ist.

Es ist ein zusätzlicher Vorteil der Erfindung, dass mehrere Ergänzungsprogramme gleichzeitig registriert werden können.

Dementsprechend stellt die Erfindung eine im Vergleich zum Stand der Technik erleichterte Handhabung von Ergänzungsprogrammen bereit.

Im Folgenden werden bevorzugte Ausführungsbeispiele der Erfindung unter Bezugnahme auf die Zeichnung ausführlicher beschrieben. Dabei zeigen:
Figur 1 ein Szenario einer Übertragung von mit Ergänzungsprogrammen zu bearbeitenden Daten zwischen zwei Rechnern gemäß dem Stand der Technik,
Figur 2 eine schematische Darstellung eines Aufrufs eines installierten Ergänzungsprogramms gemäß dem Stand der Technik,
Figur 3 eine schematische Darstellung eines Aufrufs eines nicht installierten Ergänzungsprogramms gemäß einem Ausführungsbeispiel der Erfindung,
Figur 4 ein Ablaufdiagramm eines Verfahrens gemäß einem Ausführungsbeispiel der Erfindung, und
Figur 5 ein Szenario einer Übertragung von mit Ergänzungsprogrammen zu bearbeitenden Daten zwischen zwei Rechnern gemäß einem Ausführungsbeispiel der Erfindung.

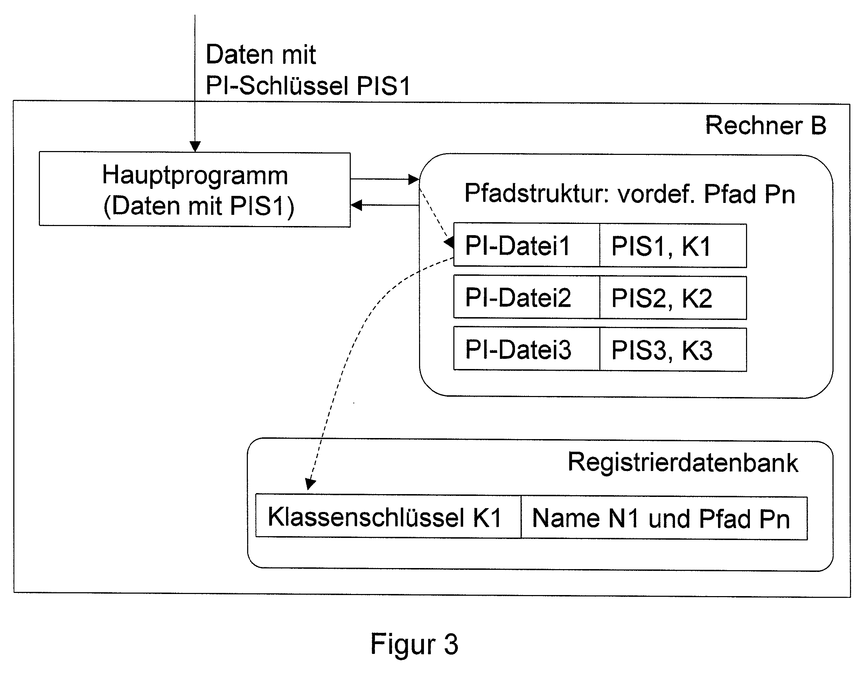

Die erfindungsgemäße Datenverarbeitungseinrichtung umfasst, wie es in dem mit "Rechner B" bezeichneten Block gemäß Figur 3 zu sehen ist, ein auf der Einrichtung installiertes Hauptprogramm, eine Registrierdatenbank und eine Pfadstruktur mit einem vordefinierten Pfad, wodurch das Hauptprogramm auf eine in dem vordefinierten Pfad gespeicherte Datei zugreifen kann.

Im Weiteren wird die Erfindung hauptsächlich mit Hinblick auf das erfindungsgemäße Verfahren beschrieben, wobei auch auf die erfindungsgemäße Datenverarbeitungseinrichtung Bezug genommen wird. Die weiteren Merkmale der erfindungsgemäßen Datenverarbeitungseinrichtung sowie des erfindungsgemäßen Computerprogramms sind für den Fachmann aus der Beschreibung des erfindungsgemäßen Verfahrens ersichtlich.

Die gemäß Figur 3 dargestellte und nachstehend in Übereinstimmung mit Figur 1 als Rechner B bezeichnete Datenverarbeitungseinrichtung empfängt von einer anderen Datenverarbeitungseinrichtung (vgl. Rechner A gemäß Figur 1) Daten. Diese Daten sind zusätzlich zu dem auf dem Rechner B installierten Hauptprogramm mit einem entsprechenden Ergänzungsprogramm bzw. Plug-In (PI) auszuführen, das auf dem Rechner B nicht installiert ist.

Erfindungsgemäß umfassen die übertragenen und an Rechner B empfangenen Daten einen Schlüssel, PI-Schlüssel genannt, der Informationen bezüglich (der Funktionalität) des zum Bearbeiten der Daten zusätzlich zum Hauptprogramm erforderlichen Ergänzungsprogramms umfasst. Bei dem dargestellten Beispiel umfassen die Daten den PI-Schlüssel PIS1. Die Zuordnung der Daten zu dem zugehörigen PI-Schlüssel erfolgt auf der Sendeseite (d.h. Rechner A) bzw. in dem korrespondierenden Hauptprogramm dort.

Wenn das Hauptprogramm in den Daten auf einen PI-Schlüssel stößt, wird zuerst geprüft, ob das erforderliche Ergänzungsprogramm auf dem Rechner installiert ist. Ist dies nicht der Fall, was hier angenommen wird, wird versucht, in zumindest einem vordefinierten Pfad bzw. Verzeichnis nach Ergänzungsprogrammdateien zu suchen.

Erfindungsgemäß ist dem Hauptprogramm bekannt, wo, d.h. in welchem Pfad, Ergänzungsprogrammdateien auf dem Rechner zu finden sind. Dazu werden vordefinierte Pfade verwendet, in denen die Ergänzungsprogrammdateien standardmäßig abgelegt werden. Ein derartiger Pfad kann ein Dateipfad des Dateisystems des Rechners sein. Es ist aber auch denkbar, dass der vordefinierte Pfad im Sinne der Erfindung eine Verknüpfung zu einer Speicherstelle außerhalb des Rechners ist, z.B. zu einer bestimmten Adresse im Internet. Mittels einer solchen Verknüpfung kann der Rechner wiederum eine auf die dort gespeicherte Ergänzungsprogrammdatei zugreifen.

Das Hauptprogramm bzw. der Rechner sucht in dem vordefinierten Pfad mit Hilfe des übertragenen PI-Schlüssels nach einer passenden Ergänzungsprogrammdatei.

Die Ergänzungsprogrammdatei oder Plug-In-Datei, kurz PI-Datei, jedes Ergänzungsprogramms bzw. Plug-In's ist hierbei eine ausführbare Datei, die zum Installieren und Registrieren des Ergänzungsprogramms auf der Datenverarbeitungseinrichtung geeignet ist. In der Praxis kann es sich dabei beispielsweise um Dateien des Formats DLL ("dynamic link library") oder EXE ("executable file") handeln. In diesen PI-Dateien sind jeweils der PI-Schlüssel und der Klassenschlüssel des zugehörigen Ergänzungsprogramms als Text bzw. Klartext im Dateibeschreibungsteil enthalten. Dadurch kann das Hauptprogramm erfindungsgemäß leicht, d.h. durch einfaches Auslesen des Dateibeschreibungsteils, mit Hilfe des in den Daten enthaltenen PI-Schlüssels nach einer in dem vordefinierten Pfad gespeicherte Ergänzungsprogrammdatei suchen, deren PI-Schlüssel mit dem empfangenen PI-Schlüssel übereinstimmt, und auf diese zugreifen (im dargestellten Fall PI-Datei 1).

Diese so erfasste PI-Datei kann zur weiteren Verwendung zum Beispiel als COM-Objekt in der Registrierdatenbank registriert werden, was durch einen entsprechenden gestrichelten Pfeil dargestellt ist. Weiterhin kann als Teil der durchsuchten Dateibeschreibung auch der Klassenschlüssel ermittelt werden, der nötig ist, um das (COM-)Objekt im Hauptprogramm auszuführen. Das Ergänzungsprogramm wird dann aktiv und holt sich (z.B. aus einer Datenbank) die zu bearbeitenden Daten.

Daher benötigen erfindungsgemäß sowohl das verwendete Hauptprogramm als auch das erforderliche Ergänzungsprogramm einen solchen zusätzlichen definierten Schlüssel, d.h. PI-Schlüssel.

Folglich ist es bei der Erfindung nicht notwendig, dass der Pfad, in dem das benötigte Ergänzungsprogramm gespeichert ist, in der Registrierdatenbank des Rechners bereits registriert ist. Das heißt, es ist nicht notwendig, dass das erforderliche Ergänzungsprogramm vor seiner Ausführung installiert wird. Vielmehr werden die entsprechenden Pfadinformationen erfindungsgemäß automatisch mit Hilfe eines den übertragenen Daten beigefügten Schlüssels erzeugt und das erforderliche Ergänzungsprogramm so identifiziert. Somit wird mittels der Erfindung eine Ausführung und/oder Registrierung des fraglichen Ergänzungsprogramms ohne vorherige Installation und damit ohne das jeweilige Installationsprogramm ermöglicht.

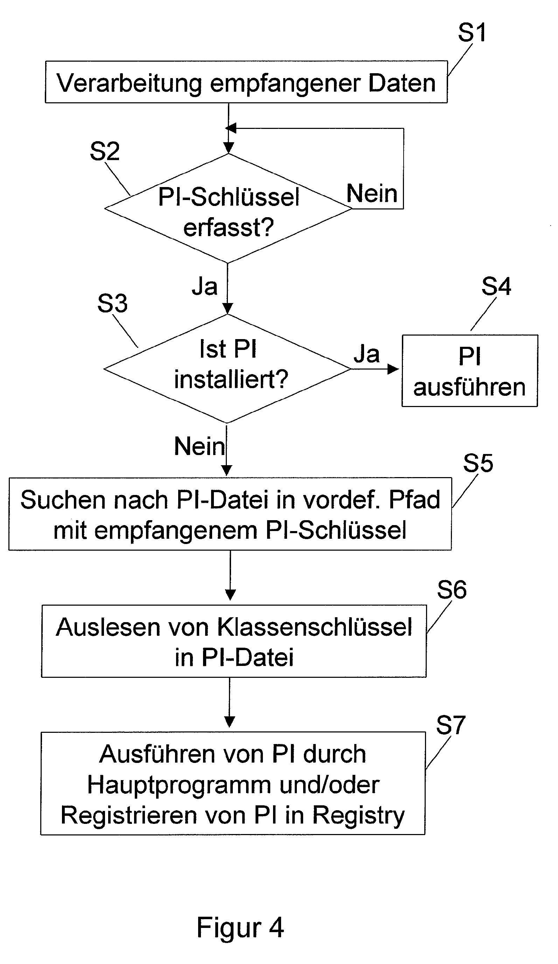

Schematisch ist der Ablauf eines Verfahrens gemäß einem Ausführungsbeispiel der Erfindung gemäß Figur 4 veranschaulicht. Im Folgenden wird er kurz umrissen:
- Schritt S1: Das Hauptprogramm verarbeitet die empfangenen Daten auf übliche Weise.
- Schritt S2: Es wird überprüft, ob ein PI-Schlüssel gemäß der Erfindung erfasst wird. Ist dies nicht der Fall, wird die normale Verarbeitung fortgesetzt. Wenn ja, wird zu Schritt S3 gegangen.
- Schritt S3: Es wird überprüft, ob das zum erfassten PI-Schlüssel gehörige Plug-In installiert oder aktiviert ist. Ist dies der Fall, wird das Plug-In in Schritt S4 ausgeführt. Wenn nein, wird zu Schritt S5 gegangen.
- Schritt S5: Im vordefinierten Pfad wird mit Hilfe des empfangenen PI-Schlüssels nach der passenden PI-Datei gesucht.
- Schritt S6: Die passende PI-Datei wird in Bezug auf den enthaltenen Klassenschlüssel ausgelesen.
- Schritt S7: Das erforderliche Plugh-In wird vom Hauptprogramm ausgeführt und/oder in der Registrierdatenbank ("Registry") registriert.

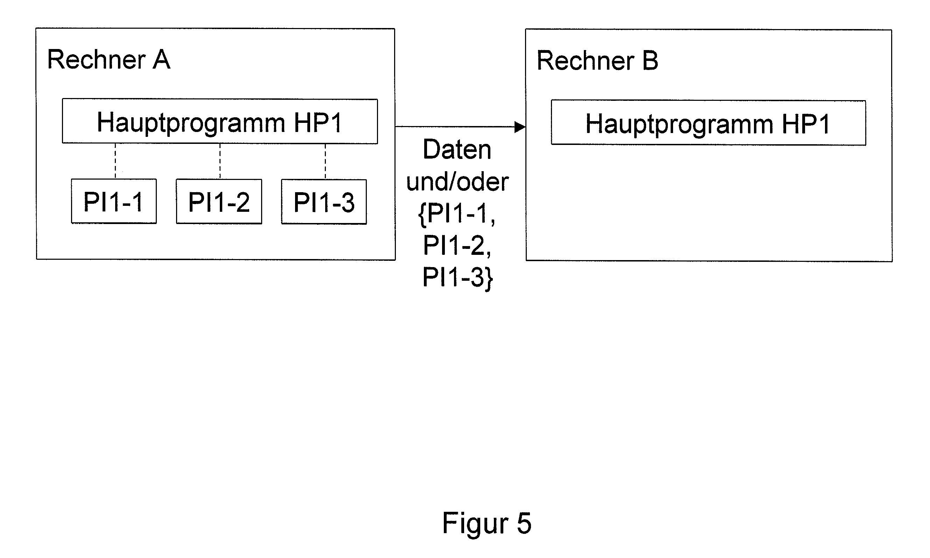

Figur 5 veranschaulicht ein Szenario einer Übertragung von mit Ergänzungsprogrammen zu bearbeitenden Daten zwischen zwei Rechnern gemäß einem Ausführungsbeispiel der Erfindung.

Rechner A als Sendeseite ist ebenso aufgebaut wie Rechner A gemäß Figur 1, d.h. mit einem Hauptprogramm HP1 und 3 dazugehörigen Ergänzungsprogrammen PI1-1, PI1-2, PI1-3.

Erfindungsgemäß werden nicht nur die zu übertragenden Daten an Rechner B transferiert, sondern auch (oder gesondert) die Ergänzungsprogrammdateien der Ergänzungsprogramme, die zu deren Bearbeitung erforderlich sind. Dies ist gemäß Figur 4 mit dem Ausdruck {PI1-1, PI1-2, PI1-3} dargestellt.

Durch Hinzunahme der Ergänzungsprogramm- bzw. PI-Dateien zu den zu übertragenden Daten werden diese auf einfache Weise mitübertragen. Sie können dann auf dem empfangenden Rechner einfach in zumindest einen vordefinierten Pfad kopiert werden. Damit können auch mehrere Ergänzungsprogrammdateien durch einen Arbeitsvorgang gleichzeitig auf den Rechner kopiert werden, und stehen sofort für eine automatische Ausführung und Registrierung ohne (manuelle) Installation bereit.

Das gleiche gilt für einen Fall, wenn die entsprechenden Ergänzungsprogrammdateien gesondert übertragen werden.

Verfahren, Datenverarbeitungseinrichtung und Computerprogramm zum Ausführen eines Ergänzungsprogramms für ein Hauptprogramm ohne vorherige Installation des Ergänzungsprogramms auf einer das Hauptprogramm ausführenden Datenverarbeitungseinrichtung, die von einer anderen Datenverarbeitungseinrichtung Daten und einen Schlüssel empfängt, der Informationen bezüglich eines zum Bearbeiten der Daten zusätzlich zum Hauptprogramm erforderlichen Ergänzungsprogramms umfasst, wobei die Datenverarbeitungseinrichtung mit Hilfe des empfangenen Schlüssels auf eine in einem vordefinierten Pfad gespeicherte Ergänzungsprogrammdatei des erforderlichen Ergänzungsprogramms zugreifen kann, die Bezeichnungsinformationen enthält, welche zum Ausführen des Ergänzungsprogramms durch das Hauptprogramm und zum Registrieren des Ergänzungsprogramms in einer Registrierdatenbank der Datenverarbeitungseinrichtung benötigt werden. Dadurch wird eine erleichterte Handhabung von Ergänzungsprogrammen bereitgestellt.

## Patentansprüche

1. Verfahren zum Ausführen eines Ergänzungsprogramms für ein Hauptprogramm auf einer das Hauptprogramm ausführenden Datenverarbeitungseinrichtung, die von einer anderen Datenverarbeitungseinrichtung Daten und einen Schlüssel empfängt, der Informationen bezüglich eines zum Bearbeiten der Daten zusätzlich zum Hauptprogramm erforderlichen Ergänzungsprogramms umfasst, wobei die Datenverarbeitungseinrichtung mit Hilfe des empfangenen Schlüssels auf eine in einem vordefinierten Pfad gespeicherte Ergänzungsprogrammdatei des erforderlichen Ergänzungsprogramms zugreifen kann, die Bezeichnungsinformationen enthält, welche zum Ausführen des Ergänzungsprogramms durch das Hauptprogramm und zum Registrieren des Ergänzungsprogramms in einer Registrierdatenbank der Datenverarbeitungseinrichtung benötigt werden.

2. Verfahren gemäß Anspruch 1, wobei das Verfahren zusätzlich ein Überprüfen aufweist, ob das erforderliche Ergänzungsprogramm auf der Datenverarbeitungseinrichtung installiert oder aktiviert ist.

3. Verfahren gemäß einem der vorhergehenden Ansprüche, wobei das Registrieren des Ergänzungsprogramms in der Registrierdatenbank ein Speichern der Bezeichnungsinformationen und des Pfads des Ergänzungsprogramms aufweist.

4. Verfahren gemäß einem der vorhergehenden Ansprüche, wobei die Bezeichnungsinformationen einen Bezeichner aufweisen, mittels dem das Hauptprogramm das Ergänzungsprogramm aufruft.

5. Verfahren gemäß einem der vorhergehenden Ansprüche, wobei die Ergänzungsprogrammdatei eine ausführbare Datei ist, die zum Installieren und Registrieren des Ergänzungsprogramms auf der Datenverarbeitungseinrichtung geeignet ist.

6. Verfahren gemäß einem der vorhergehenden Ansprüche, wobei die Bezeichnungsinformationen in der Ergänzungsprogrammdatei in Form von Klartext enthalten sind.

7. Verfahren gemäß einem der vorhergehenden Ansprüche, wobei der vordefinierte Pfad ein Dateipfad der Datenverarbeitungseinrichtung ist.

8. Verfahren gemäß einem der vorhergehenden Ansprüche, wobei der vordefinierte Pfad eine Verknüpfung zu einer Speicherstelle außerhalb der Datenverarbeitungseinrichtung ist.

9. Verfahren gemäß einem der vorhergehenden Ansprüche, wobei die Ergänzungsprogrammdatei als eine einer Vielzahl von Ergänzungsprogrammdateien für unterschiedliche Ergänzungsprogramme in dem Pfad gespeichert wird.

10. Verfahren gemäß einem der vorhergehenden Ansprüche, wobei das Ergänzungsprogramm durch das Hauptprogramm als Objekt gemäß einem Komponentenobjektmodell behandelt wird.

11. Verfahren gemäß einem der vorhergehenden Ansprüche, wobei die von der anderen Datenverarbeitungseinrichtung übertragenen Daten zumindest die Ergänzungsprogrammdatei für das erforderliche Ergänzungsprogramm umfassen.

12. Verfahren gemäß einem der vorhergehenden Ansprüche, wobei das Verfahren zusätzlich ein Übertragen von Daten und eines Schlüssels an eine andere Datenverarbeitungseinrichtung aufweist, wobei der Schlüssel Informationen bezüglich einer Funktionalität des zum Bearbeiten der Daten zusätzlich zum Hauptprogramm erforderlichen Ergänzungsprogramms bezeichnet.

13. Verfahren gemäß Anspruch 12, wobei das Verfahren zusätzlich ein Zuordnen eines entsprechenden Schlüssels zu den zu übertragenden Daten aufweist.

14. Datenverarbeitungseinrichtung zum Ausführen eines Ergänzungsprogramms für ein Hauptprogramm des Ergänzungsprogramms auf der das Hauptprogramm ausführenden Datenverarbeitungseinrichtung, wobei die Datenverarbeitungseinrichtung angepasst ist, das Verfahren gemäß einem der vorhergehenden Ansprüche auszuführen.

15. Computerprogramm, das Computerprogrammcodemittel umfasst, die für die Ausführung des Verfahrens gemäß einem der Ansprüche 1 bis 13 geeignet sind, wenn das Programm auf einem Computer ausgeführt wird.

16. Computerprogramm gemäß Anspruch 15, das auf einem computerlesbaren Medium enthalten ist.
